# EUROPÄISCHE PATENTSCHRIFT

(11) **EP 2 094 999 B1**
(45) Veröffentlichungstag und Bekanntmachung des Hinweises auf die Patenterteilung: **17.10.2012**
(21) Anmeldenummer: 07847021.8
(22) Anmeldetag: 07.12.2007
(51) Int. Cl.: F16J 15/32

(54) **DICHTUNGSANORDUNG**
ARRANGEMENT
SYSTÈME

(30) Priorität: 13.12.2006 DE 102006058699
(43) Veröffentlichungstag der Anmeldung: 02.09.2009
(73) Patentinhaber: AB SKF, 415 50 Göteborg (SE)
(72) Erfinder: KURTH, Jürgen, 51519 Odenthal (DE); LE BARS, Gwenael, 42799 Leichlingen (DE)
(74) Vertreter: Kohl, Thomas
(86) Internationale Anmeldenummer: PCT/EP2007/010671
(87) Internationale Veröffentlichungsnummer: WO 2008/071354

(56) Entgegenhaltungen:
- EP-A- 0 128 645
- WO-A-02/04846
- WO-A-2006/077067
- GB-A- 2 177 167
- US-A- 4 288 083
- US-A- 4 497 496

## Beschreibung

Die Erfindung betrifft eine Anordnung, umfassend ein Deckelelement zum Abdichten zwischen einem eine Durchtrittsöffnung für eine Welle begrenzenden Bauelement und der durch die Durchtrittsöffnung hindurchtretenden Welle.

Insbesondere bei Verbrennungskraftmaschinen und Getrieben im Automobilbereich werden an dort eingesetzte Wellendichtungen besondere Anforderungen hinsichtlich Lebensdauer, Reibleistung und Montagesicherheit gestellt. Dabei sind Radialwellendichtringe mit Dichtlippen aus chemisch hoch beständigen Polytetrafluorethylen (PTFE) und einer spiralförmigen Förderstruktur, beispielsweise für ein synthetisches Öl der Verbrennungskraftmaschine, bekannt. Dabei werden zur Minderung der Reibleistung die durch die Welle aufgeweiteten Lippenquerschnitte bis in den Bereich der PTFE-Korngröße reduziert und die ohnehin guten Gleiteigenschaften des PTFE teilweise durch Füllstoffe, wie Graphit oder Molybdändisulfid begünstigt. Dabei ist es weiterhin bekannt, dass beispielsweise Verbrennungskraftmaschinen in einem Bereich, in dem eine Welle aus der Maschine nach außen durchtritt, die Verbrennungskraftmaschine einen Abschlussdeckel aus gezogenem Blech mit schallisolierenden Zwischenlagen umfasst, wobei die Abdichtung zwischen dem Abschlussdeckel und der Welle von einem Deckelelement mit integrierter Wellendichtung übernommen wird, das beispielsweise schnellverschlussartig mit kleinen Montagekräften dauerhaft fest am Abschlussdeckel fixierbar ist. Weiterhin wird zum Nachweis der ordnungsgemäßen Positionierung der Wellendichtung die Wellendichtung nach ihrem Einbau immer häufiger einer automatisierten Druck- und/oder Vakuumprüfung am Montageband der Verbrennungskraftmaschine oder des Getriebes unterzogen. Aufgrund der geringen Elastizität der PTFE-Dichtlippe, ihrer niedrigen spezifischen Anlagekraft zur Welle, ihrer durch ihre Füllstoffe amorphen Struktur der Wellenkontaktfläche und ihrer zur Atmosphäre hin offenen spiralförmigen Ölrückförderstruktur kann ihr Kontaktbereich zur Welle nicht ohne weitere Zusatzstoffe ausreichend gasdicht verschlossen werden.

Beispiele von Radialwellendichtringen sind im WO 2006/077067 A1 und WO 02/04846 A1 offenbart.

Eine Aufgabe der vorliegenden Erfindung ist es daher, eine verbesserte Anordnung, umfassend ein Deckelelement zum Abdichten zwischen einem eine Durchtrittsöffnung für eine Welle begrenzenden Bauelement und der durch die Durchtrittsöffnung hindurchtretenden Welle zu schaffen, bei der ein Montagevorgang des Deckelelements und anschließender Dichtigkeitstest schnell und einfach durchführbar sind.

Die Aufgabe wird durch den Gegenstand des Anspruchs 1 gelöst. Vorteilhafte Ausgestaltungen sind in den Unteransprüchen beschrieben.

Die Erfindung beruht dabei auf der Erkenntnis, dass bei Ausbildung des dynamischen Dichtabschnitts aus einem Elastomermaterial, also nicht aus PTFE, und mit besagter auf einem Kreiszylindermantel verlaufenden, in Umfangsrichtung in sich geschlossenen Linie, besagte Druck- und/oder Vakuumprüfung ohne ein Aufbringen von Zusatzmaterialien auf den Dichtabschnitt möglich ist, und dass der ans Deckelelement fest angebundene Dichtabschnitt trotz der anderen Eigenschaften des Dichtabschnitts aus dem Elastomermaterial gegenüber einem aus PTFE, bei der Montage des beispielsweise bajonettverschlussartig ausgebildeten Deckelelements, was bekanntlich eine Verdrehbewegung des Deckelelements erfordert, und auch beim Aufschieben auf die Welle keine systembedingten Handhabungseinbußen und auch keine Beschädigungen oder sonst irgendwelche Beeinträchtigungen am Dichtabschnitt auftreten, was von vorne herein nicht zu erwarten war, da bei der Montage des Deckelelements die Welle noch nicht bestimmungsgemäß mit einem Schmiermittel in Verbindung steht und der aus dem Elastomermaterial ausgebildete Dichtabschnitt gegenüber einem vergleichbaren aus PTFE an der ungeschmierten Welle stärker anhaftet.

In einer vorteilhaften Ausgestaltung sind der dynamische und der statische Dichtbereich aus dem gleichen Elastomermaterial, insbesondere über eine Mantelschicht miteinander einstückig verbunden ausgebildet. Damit werden zusätzliche Vorteile insbesondere im Hinblick auf eine besonders einfache, schnelle und damit kostengünstige Herstellbarkeit, insbesondere im Rahmen eines einzigen, gleichzeitig beide Dichtbereiche erzeugenden Spritzgießvorgangs erzielt.

Weitere Vorteile, Merkmale und Einzelheiten der Erfindung ergeben sich aus dem im folgenden beschriebenen Ausführungsbeispiel der Erfindung anhand der Figuren. Dabei zeigen:
- Figur 1: einen Längsschnitt durch eine Anordnung, umfassend ein Deckelelement zum Abdichten zwischen einem eine Durchtrittsöffnung für eine Welle begrenzenden Bauelement und der durch die Durchtrittsöffnung hindurchtretenden Welle und
- Figur 2: schematisch eine Frontansicht der Anordnung der Figur 1 vom Ölraum aus gesehen.

Die Figuren zeigen dabei als ein Ausführungsbeispiel der Erfindung eine Anordnung, umfassend ein Deckelelement 5 zum Abdichten zwischen einem eine Durchtrittsöffnung für eine Welle 1 begrenzenden Bauelement 3, insbesondere einen Abschlussdeckel eines Verbrennungsmotors, und der durch die Durchtrittsöffnung hindurchtretenden Welle 1. Das Deckelelement 5 umfasst dabei ein Trägerelement 10 aus einem zähharten Kunststoff und ein Elastomerteil 20 beispielsweise aus einem Fluorelastomer, das an das Trägerelement 10 anvulkanisiert ausgebildet ist. Das Trägerelement 10 mit seinen Haken 12 ist dabei beispielsweise durch ein Spritzgießen hergestellt. In anderen Ausführungsformen kann es aber auch aus Metall bestehen oder aus einem anderen, beispielsweise verstärkten Material. Für ein dynamisches Abdichten zwischen dem Deckelelement 5 und der Welle 1 umfasst dabei das Elastomerteil 20 einen dynamischen Dichtbereich 21 und für ein statisches Abdichten zwischen dem Deckelelement und dem Bauelement einen statischen Dichtbereich 25.

Die Aufgabe des dynamischen Dichtbereichs 21 ist es dabei, das Innere des Verbrennungsmotors, sprich einen Ölraum 7, gegen eine Umgebung, also zur Luftseite hin, abzudichten. Dabei umfasst der dynamische Dichtbereich 21 eine Dichtlippe 22, die derart ausgebildet ist, dass sie entlang eines zylindermantelartigen Wellenabschnitts einen abdichtend wirkenden, hohlzylinderartigen Dichtabschnitt bildet, dessen Innenmantel für ein Rückfördern von Leckageöl in den abzudichtenden Ölraum 7 wenigstens einen Teil einer Rückförderstruktur umfasst. Die Rückförderstruktur umfasst dabei sichelartig verlaufende Nuten 23, die sich über den hohlzylindermantelartigen Dichtabschnitt hinaus auch in den an den hohlzylinderartigen Dichtabschnitt anschließenden, trompetenartigen Abschnitt der Dichtlippe 22 hinein erstrecken können. In einer anderen Ausführungsform kann auch eine schraubenartig verlaufende Nut vorgesehen sein, dabei ist auch eine mehrgängige Ausbildung möglich.

Weiterhin ist besagter Innenmantel des Dichtabschnitts mit einer auf einem Kreiszylindermantel verlaufenden, in Umfangsrichtung in sich geschlossenen Linie ausgebildet, die wenigstens bei sich nicht drehender Welle 1 zum abdichtenden Anliegen an der Welle 1 vorgesehen ist, was unter anderem für die eingangs beschriebene Druck- und/oder Vakuumprüfung von besonderem Vorteil ist. Dabei ist besagte in sich geschlossene Linie im dargestellten Beispiel am ölraumseitigen axialen Ende der Dichtlippe 22 als ringartig umlaufender Steg 24 ausgebildet. In anderen Ausführungsformen kann die Rückförderstruktur und/oder die in sich geschlossene Linie auch gemäß dem in der DE 10 2006 025 799 Offenbarten ausgebildet sein.

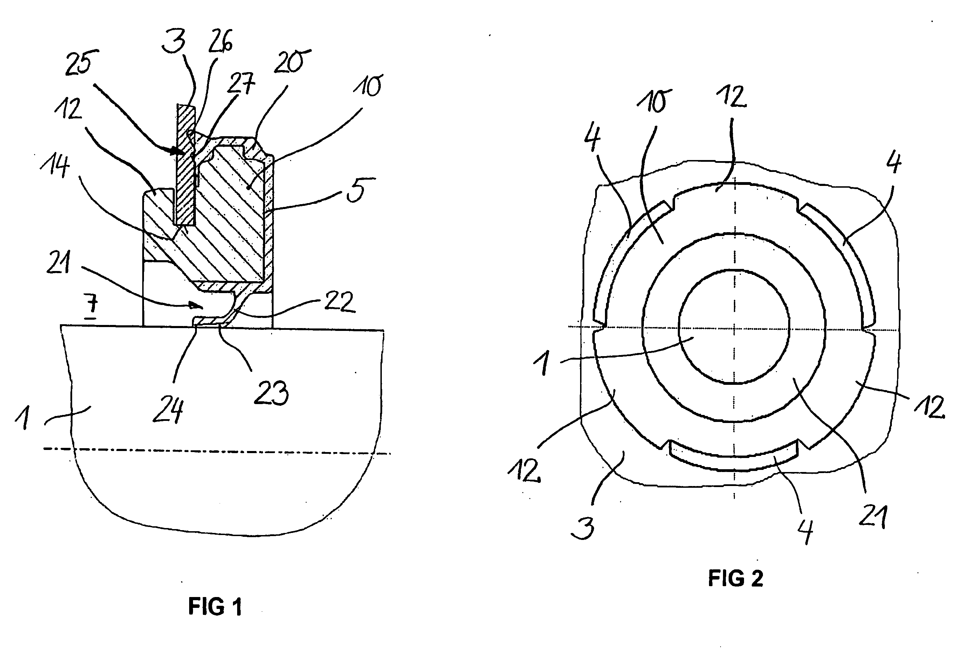

Der dynamische Dichtbereich 21 ist dabei über eine sich im wesentlichen auf der Luftseite erstreckende, das Trägerelement 10 abdeckende Mantelschicht mit dem statischen Dichtbereich 25 verbunden. Dabei umfasst der statische Dichtbereich 25 zwei ringartige, in axialer Richtung auskragende, radial umlaufende Dichtlippen 26 und 27, die in der Figur 1 entsprechend unverformt dargestellt sind und bei einem Montieren des Deckelelements 5 am Bauelement 3 gegen das Bauelement 3 gedrückt und verformt werden, wodurch zwischen dem Deckelelement 5 und dem Bauelement 3 eine gute Abdichtung erzielt wird.

Für eine einfache und schnelle Montage wie auch für einen einfachen und schnellen Austausch des Deckelelements 5 ist das Deckelelement 5 lösbar mittels einer Schnellschlussverbindung mit dem Bauelement 3 verbunden. Dabei ist die Schnellschlussverbindung bajonettverschlussartig ausgebildet, wozu eine Vielzahl am Trägerelement 10 ausgebildeter, sich radial erstreckender Haken 12 vorgesehen sind, die zu entsprechenden, an der Durchtrittsöffnung des Bauelements 3 ausgebildeten Ausnehmungen 4 passen. Dabei sind drei Haken 12 und drei Ausnehmungen 4 vorgesehen, die äquidistant über den Umfang angeordnet sind. Bei der Montage wird dabei das Deckelelement 5 mit seinen Haken 12 in axialer Richtung durch die Ausnehmungen 4 am Bauelement 3 bis zum Anschlagen am Bauelement 3 hindurchgedrückt und anschließend um einen Winkel von etwa 60° gedreht, wodurch die Haken 12 hinter das Bauelement 3 greifen, so dass das Deckelelement 5 axial gesichert wird und über an den Haken 12 flach ansteigende Rampen gegeneinander verspannt werden. Um ein unerwünschtes Drehen des Deckelelements 5 relativ zum Bauelement 3 nach der Montage zusätzlich zu verhindern, kann eine nicht dargestellte Aussparung oder ein Anschlag am Bauelement 3 vorgesehen sein.

Um ein präzises Zentrieren des Deckelelements 5 in der Durchtrittsöffnung des Bauelements 3 sicherzustellen, ist die Durchtrittsöffnung zur Welle koaxial. Das Trägerelement 10 des Deckelelements 5 hat dann eine äußere Umfangsfläche 14, die relativ zum äußeren Umfang der Haken 12 radial zurückgesetzt ist und die so gefertigt ist, dass sie mit der Durchtrittsöffnung zusammenwirkt, um das Deckelelement 5 im Bauelement 3 präzise zu positionieren. In anderen Ausführungsformen können für ein präzises Zentrieren das Deckelelement und/oder das Bauelement auch gemäß dem bei der DE 10 2005 032 893 Offenbarten ausgebildet sein.

In wiederum anderen Ausführungsformen kann die Schnellverschlussverbindung auch schnappverschlussartig ausgebildet sein, wobei beispielsweise Haken vorgesehen sind, die auf oder in korrespondierende Ausnehmungen einschnappen können, wenn das Deckelelement bei der Montage in seine axiale Endposition gedrückt wird.

## Patentansprüche

1. Anordnung, umfassend ein Deckelelement (5) und ein Bauelement (3) mit einer Durchtrittsöffnung, zum Abdichten zwischen dem die Durchtrittsöffnung für eine Welle (1) begrenzenden Bauelement und der durch die Durchtrittsöffnung hindurchtretenden Welle, beinhaltend folgende Merkmale:
- Das Deckelelement (5) und die Durchtrittsöffnung sind derart ausgebildet, dass sie schnellverschlussartig miteinander verbindbar sind,
- das Deckelelement (5) umfasst für ein Abdichten gegenüber der Welle (1) einen dynamischen (21) und für ein statisches Anliegen gegenüber dem Bauelement einen statischen (25) Dichtbereich, **dadurch gekennzeichnet, dass**
- der dynamische Dichtbereich (21) aus einem Elastomermaterial ausgebildet ist und einen entlang eines zylindermantelartigen Wellen-abschnitts abdichtend wirkenden Dichtabschnitt, umfasst dessen Innenmantel für ein Rückfördern eines Leckagefluids in einen abzudichtenden Raum (7) wenigstens einen Teil einer Rückförderstruktur (23) umfasst und mit wenigstens einer auf einem Kreiszylindermantel verlaufenden, in Umfangsrichtung in sich geschlossenen Linie ausgebildet ist, die wenigstens bei sich nicht drehender Welle zum abdichtenden Anliegen an der Welle vorgesehen ist, und besagte Linie ist an wenigstens einem axialen Ende des Dichtabschnitts kreisringartig ausgebildet (24).

2. Anordnung nach Anspruch 1, wobei beide Dichtbereiche (21, 25) aus einem gleichen Elastomermaterial und/oder miteinander verbunden, einstückig ausgebildet sind.

3. Anordnung nach einem der Ansprüche 1 oder 2, wobei das Elastomermaterial ein Fluorpolymer, ein Fluorsilicon, Polyacrylatkautschuk (ACM/AEM) und/oder PTFE-Nanopartikel umfasst.

4. Anordnung nach einem der Ansprüche 1 bis 3, wobei das Deckelelement (5) ein Trägerelement (10) umfasst, mit dem die beiden Dichtbereiche (21,25) fest verbunden sind, wobei das Trägerelement (10) aus einem zähharten Kunststoff ausgebildet ist, wobei die Dichtbereiche an das Trägerelement insbesondere anvulkanisiert ausgebildet sind, und/oder wobei die beiden Dichtbereiche über eine Mantelschicht miteinander verbunden sind, die das Trägerelement weitgehend an einer dem abzudichtenden Raum abgewandten Seite bedeckt.

5. Anordnung nach einem der Ansprüche 1 bis 4, wobei der Dichtabschnitt hohlzylinderartig ist, und/oder eine radiale Dicke des Dichtabschnitts im Bereich besagter Linie 0,3 bis 1,0 mm, insbesondere 0,4 bis 0,55 mm beträgt.

6. Anordnung nach einem der Ansprüche 1 bis 5, wobei der Dichtabschnitt glatt übergehend in einen sich trompetenartig aufweitenden Abschnitt ausgebildet ist, wobei der trompetenartige Abschnitt einen Teil der Rückförderstruktur (23) umfasst, und/oder wobei das Dichtelement derart ausgebildet ist, dass der trompetenartige Abschnitt einen nach außen hin abzudichtenden Raum (7) nach außen hin erweitert oder ihn nach innen hin verkleinert.

7. Dichtelement nach einem der Ansprüche 1 bis 6, wobei die Rückförderstruktur (23) schraubengangartig ausgebildet ist.

8. Anordnung nach einem der Ansprüche 1 bis 7, wobei bei bestimmungsgemäß an der Welle anliegendem Dichtabschnitt die Rückförderstruktur (23) wenigstens drei in Umfangsrichtung verteilt angeordnete Nuten umfasst, wobei wenigstens eine der Nuten sichelartig verlaufend ausgebildet ist, wobei eine der Nuten sich in einem Segment des Dichtabschnitts erstreckend ausgebildet ist, das kleiner gleich einem Umfangswinkel von 120° aufweist, wobei wenigstens eine der Nuten bogenartig verlaufend, sich mit wenigstens einer weiteren, ebenfalls bogenartig ausgebildeten Nut sich kreuzend ausgebildet ist, wobei wenigstens eine der Nuten zu der axialen Seite hin, zu der hin rückzufördern ist, mit einer sich vergrößernder Breite ausgebildet ist, wobei wenigstens eine der Nuten rampenartig in besagte Linie übergehend ausgebildet ist, wobei wenigstens eine der Nuten zu der axialen Seite hin, zu der hin rückzufördern ist, in Achsrichtung offen auslaufend ausgebildet ist, wobei ein Verhältnis einer radialen Dicke besagter Linie zu einer Tiefe wenigstens einer der Nuten im Bereich 5,0 bis 1,65 ausgebildet ist, wobei wenigstens eine der Nuten mit einer Tiefe von 0,1 bis 0,4 mm ausgebildet ist, und/oder wobei die Nuten mit einer derartigen radialen Breite ausgebildet sind, dass dazwischen lediglich Stege verbleiben, deren Anlagefläche an der Welle im Bereich des Dichtabschnitts auf besagtem Kreiszylinder verlaufen.

9. Anordnung nach einem der Ansprüche 1 bis 8, wobei das Deckelelement (5) und die Durchtrittsöffnung derart ausgebildet sind, dass sie bajonettverschlussartig miteinander verbindbar sind, wobei für das bajonettverschlussartige Verbinden das Deckelelement eine Vielzahl sich radial erstreckender Haken (12) aufweist, die in Ausnehmungen (4) passen, die vorzugsweise äquidistant entlang eines Umfangs der Durchtrittsöffnung angeordnet sind, wobei insbesondere drei Haken vorgesehen sind, und/oder wobei das Trägerelement in der Durchtrittsöffnung durch zumindest einen Teil seines äußeren Umfangs zentriert ist.

10. Anordnung nach einem der Ansprüche 1 bis 9, wobei der statische Dichtbereich (25) aus einem Material, umfassend Silicon, ausgebildet ist.

11. Anordnung nach einem der Ansprüche 1 bis 10, wobei die Anordnung einem Verbrennungsmotor zugehört.

## Claims

1. Arrangement comprising a lid element (5) and a component (3) with a passage orifice, for sealing between the component defining the passage orifice for a shaft (1) and the shaft passing through the passage orifice, comprising the following features:
- the lid element (5) and the passage orifice are constructed such that they may be connected together in the manner of a quick-action closure,
- the lid element (5) comprises a dynamic sealing region (21) for sealing relative to the shaft (1) and a static sealing region (25) for resting statically against the component, **characterized in that**
- the dynamic sealing region (21) is produced from an elastomer material and comprises a sealing portion with a sealing action along a cylinder acket-like shaft portion, the internal surface of which sealing portion comprises at least part of a return structure (23) for returning leakage fluid back into a space (7) to be sealed and is formed with at least one continuous line which extends in a circumferential direction on a circular cylindrical jacket, which line, when the shaft is not in rotation, is provided in order to rest in sealing manner against the shaft and said line takes the form of a circular ring (24) at at least one axial end of the sealing portion.

2. Arrangement according to Claim 1, wherein both sealing regions (21, 25) are of one-piece construction produced from one and the same elastomer material and/or joined together.

3. Arrangement according to one of Claims 1 or 2, wherein the elastomer material comprises a fluoropolymer, a fluorosilicone, polyacrylate rubber (ACM/AEM) and/or PTFE nanoparticles.

4. Arrangement according to one of Claims 1 to 3, wherein the lid element (5) comprises a carrier element (10), to which the two sealing regions (21, 25) are solidly connected, wherein the carrier element (10) is produced from a hard and tough plastics material, wherein the sealing regions are in particular vulcanized onto the carrier element, and/or wherein the two sealing regions are joined together via a jacket layer which largely covers the carrier element on a side remote from the space to be sealed.

5. Arrangement according to one of Claims 1 to 4, wherein the sealing portion is of hollow cylindrical construction and/or a radial thickness of the sealing portion in the region of said line amounts to 0.3 to 1.0 mm, in particular 0.4 to 0.55 mm.

6. Arrangement according to one of Claims 1 to 5, wherein the sealing portion is of smooth construction merging into a flaring trumpet-like portion, wherein the trumpet-like portion comprises part of the return structure (23), and/or wherein the sealing element is constructed such that the trumpet-like portion expands a space (7) to be sealed relative to the outside towards the outside or reduces it towards the inside.

7. Sealing element according to one of Claims 1 to 6, wherein the return structure (23) is of screw thread-like construction.

8. Arrangement according to one of Claims 1 to 7, wherein, when the sealing portion is resting properly against the shaft, the return structure (23) comprises at least three grooves distributed in the circumferential direction, wherein at least one of the grooves is of crescent-like construction, wherein one of the grooves extends over a segment of the sealing portion which is less than or equal to a circumferential angle of 120°, wherein at least one the grooves is of arcuate construction intersecting with at least one further, likewise arcuate groove, wherein at least one of the grooves is constructed with a width which increases towards the axial side towards which return is to proceed, wherein at least one of the grooves merges in ramp-like manner into said line, wherein at least one of the grooves opens out in the axial direction towards the axial side towards which return is to proceed, wherein a radial thickness of said line has a ratio to a depth of at least one of the grooves in the range from 5.0 to 1.65, wherein at least one the grooves is constructed with a depth of 0.1 to 0.4 mm, and/or wherein the grooves are constructed with a radial width such that all that remains between them is webs, the contact surface of which extends on said circular cylinder on the shaft in the region of the sealing portion.

9. Arrangement according to one of Claims 1 to 8, wherein the lid element (5) and the passage orifice are constructed such that they may be connected together in the manner of a bayonet closure, wherein, for the purpose of connection in the manner of a bayonet closure, the lid element comprises a plurality of radially extending hooks (12) which fit into recesses (4) which are preferably arranged equidistantly along a circumference of the passage orifice, wherein in particular three hooks are provided, and/or wherein the carrier element is centred in the passage orifice by at least part of its outer circumference.

10. Arrangement according to one of Claims 1 to 9, wherein the static sealing region (25) is constructed from a material comprising silicone.

11. Arrangement according to one of Claims 1 to 10, wherein the arrangement belongs to a combustion engine.

## Revendications

1. Système, comprenant un élément de couvercle (5) et un élément de construction (3) avec une ouverture de passage à rendre étanche entre l'élément de construction limitant l'ouverture de passage pour un arbre (1) et l'arbre passant à travers l'ouverture de passage, présentant les caractéristiques suivantes:
- l'élément de couvercle (5) et l'ouverture de passage sont réalisés d'une manière telle qu'ils puissent être assemblés l'un à l'autre par raccord rapide,
- l'élément de couvercle (5) comprend, pour l'étanchéité par rapport à l'arbre (1), une zone d'étanchéité dynamique (21) et une zone d'étanchéité statique (25) pour une application statique par rapport à l'élément de construction,
**caractérisé en ce que**
- la zone d'étanchéité dynamique (21) est réalisée en un matériau élastomère et comprend une partie d'étanchéité opérant de façon étanche le long d'une partie d'arbre à surface latérale cylindrique et dont la surface intérieure comporte au moins une partie d'une structure de retour (23) pour un retour d'un fluide de fuite dans une chambre (7) à rendre étanche et est réalisée avec au moins une ligne s'étendant sur une surface latérale cylindrique circulaire et fermée sur elle-même en direction périphérique, qui est prévue pour l'application étanche sur l'arbre lorsque l'arbre ne tourne pas, et ladite ligne est réalisée (24) en forme d'anneau circulaire sur au moins une extrémité axiale de la partie d'étanchéité.

2. Système selon la revendication 1, dans lequel les deux zones d'étanchéité (21, 25) sont réalisées d'une seule pièce et/ou assemblées l'une à l'autre en un même matériau élastomère.

3. Système selon l'une quelconque des revendications 1 ou 2, dans lequel le matériau élastomère comprend un fluoropolymère, un fluorosilicone, du caoutchouc polyacrylique (ACM/AEM) et/ou des nanoparticules de PTFE.

4. Système selon l'une quelconque des revendications 1 à 3, dans lequel l'élément de couvercle (5) comprend un élément de support (10), avec lequel les deux zones d'étanchéité (21, 25) sont solidarisées, dans lequel l'élément de support (10) est réalisé en une matière plastique tenace, dans lequel les zones d'étanchéité sont en particulier vulcanisées sur l'élément de support, et/ou dans lequel les deux zones d'étanchéité sont assemblées l'une à l'autre par une couche d'enveloppe, qui recouvre largement l'élément de support sur un côté situé à l'opposé de la chambre à rendre étanche.

5. Système selon l'une quelconque des revendications 1 à 4, dans lequel la partie d'étanchéité est réalisée en forme de cylindre creux et/ou une épaisseur radiale de la partie d'étanchéité vaut de 0,3 à 1,0 mm, en particulier de 0,4 à 0,55 mm, dans la région de ladite ligne.

6. Système selon l'une quelconque des revendications 1 à 5, dans lequel la partie d'étanchéité est réalisée par transition lisse en une partie s'évasant en forme de trompette, dans lequel la partie en forme de trompette comprend une partie de la structure de retour (23), et/ou dans lequel l'élément d'étanchéité est réalisé d'une manière telle que la partie en forme de trompette agrandisse vers l'extérieur une chambre (7) à rendre étanche vers l'extérieur ou la réduise vers l'intérieur.

7. Système selon l'une quelconque des revendications 1 à 6, dans lequel la structure de retour (23) est réalisée en forme de filet hélicoïdal.

8. Système selon l'une quelconque des revendications 1 à 7, dans lequel, lorsque la partie d'étanchéité est appliquée comme prévu sur l'arbre, la structure de retour (23) comprend au moins trois rainures réparties dans la direction périphérique, dans lequel au moins une des rainures est réalisée en forme de croissant, dans lequel une des rainures s'étend dans un segment de la partie d'étanchéité qui est inférieur ou égal à un angle au centre de 120°, dans lequel au moins une des rainures s'étendant en forme d'arc est réalisée en croisement avec au moins une autre rainure également réalisée en forme d'arc, dans lequel au moins une des rainures est réalisée avec une largeur augmentant en direction du côté axial vers lequel le retour doit se faire, dans lequel au moins une des rainures est réalisée en une transition en forme de rampe vers ladite ligne, dans lequel au moins une des rainures est réalisée en se terminant par une ouverture en direction axiale vers le côté axial vers lequel le retour doit se faire, dans lequel un rapport d'une épaisseur radiale de ladite ligne à une profondeur d'au moins une des rainures se situe dans une plage de 5,0 à 1,65, dans lequel au moins une des rainures est réalisée avec une profondeur de 0,1 à 0,4 mm, et/ou dans lequel les rainures sont réalisées avec une largeur radiale telle qu'il subsiste entre elles des nervures, dont la face d'appui sur l'arbre s'étend sur ledit cylindre circulaire dans la région de la partie d'étanchéité.

9. Système selon l'une quelconque des revendications 1 à 8, dans lequel l'élément de couvercle (5) et l'ouverture de passage sont réalisés d'une manière telle qu'ils puissent être assemblés l'un à l'autre par un verrouillage à baïonnette, dans lequel l'élément de couvercle présente, pour l'assemblage à baïonnette, une pluralité de crochets (12) s'étendant radialement, qui s'ajustent dans des évidements (4), qui sont disposés de préférence à équidistance le long d'une périphérie de l'ouverture de passage, dans lequel il est prévu en particulier trois crochets, et/ou dans lequel l'élément de support est centré dans l'ouverture de passage par au moins une partie de sa périphérie extérieure.

10. Système selon l'une quelconque des revendications 1 à 9, dans lequel la zone d'étanchéité statique (25) est réalisée en un matériau comprenant du silicone.

11. Système selon l'une quelconque des revendications 1 à 10, dans lequel le système fait partie d'un moteur à combustion interne.
